# EUROPEAN PATENT APPLICATION

(11) **EP 3 633 816 A1**
(43) Date of publication of application: **08.04.2020**
(21) Application number: 18197993.1
(22) Date of filing: 01.10.2018
(51) Int. Cl.: H02J 3/38, H02M 7/483, H02M 7/487

(54) **INVERTER ARRANGEMENT EMPLOYING PHOTOVOLTAIC ENERGY DELIVERY ELEMENTS**

(71) Applicant: ABB Schweiz AG, 5400 Baden (CH)
(72) Inventor: DA SILVEIRA POSTIGLIONE, Cicero, 72356 Västerås (SE); DIJKHUIZEN, Frans, 726 31 Skultuna (SE); SVENSSON, Jan, 72346 Västerås (SE); NAMI, Alireza, 722 19 Västerås (SE); CANALES, Francisco, 5405 Baden-Dättwil (CH)
(74) Representative: Kolster Oy Ab

(57) **Abstract**

An inverter arrangement (10A) based on photovoltaic elements comprises at least two strings comprising switching elements, which strings are connected to at least two AC terminals (AC1, AC2, AC3), where at least one of the strings is a string of submodules (SiA, S2A, S3A, S4A, S5A, S6A, S1B, S2B, S3B, S4B, S5B, S6B, S1C, S2C, S3C, S4C, S5C, S6C), each submodule comprising at least two switching elements and an energy storage element, having DC terminals and being configured to make a voltage contribution to the forming of an AC voltage on an AC terminal, and a number of input stages (IS1, IS2, IS3, IS4, IS5, IS6) each comprising at least one energy delivery element, where at least some of the energy delivery elements are photovoltaic elements, each input stage being connected to DC terminals of a corresponding for delivering power to or from at least one AC terminal (AC1, AC2, AC3) when the corresponding submodule contributes to the forming of the AC voltage on the AC terminal.

## Description

### FIELD OF INVENTION

The present invention relates to an inverter arrangement that is based on photovoltaic elements.

### BACKGROUND

Photovoltaic systems are widely known and used worldwide for the generation of electric power.

The main objective of such systems is to harvest the maximum amount of energy produced in Direct Current (DC) by the photovoltaic modules or elements and either store it in energy storage elements, such as batteries, consume locally or convert it into Alternating Current (AC) to transfer it to a power grid. When it comes to grid connected system, the key element is a DC-AC converter, also known as an inverter.

Many different solutions are available on the market today, such as: Central inverters, string inverters, micro inverters and more recently DC optimizers to improve the performance of string and central inverters. Each approach presents its advantages and disadvantages. For low power residential use, the solutions are mainly string inverters and micro inverters.

Another type of inverter gaining attention in more recent years is based on cascaded H-bridge converters or submodules, which are operated in such way as to create a staircase waveform (very close to the grid sinewave), reducing significantly the AC filtering stage. WO 2013/030236 gives a example of such use of cascaded H-bridge converters. Each H-bridge is connected to one photovoltaic element, and the system benefits from high efficiency conversion and high energy harvesting yield.

However, there is still room for improvement.

There is in view of the above-mentioned prior art still a need for improvements in relation to the generation of power in an inverter arrangement that is based on photovoltaic elements.

### SUMMARY OF THE INVENTION

The present invention is directed towards providing improvements of an inverter arrangement that is based on photovoltaic elements.

This is achieved through an inverter arrangement based on photovoltaic elements, the inverter arrangement comprising:
at least two strings comprising switching elements, where the strings are connected to at least two Alternating Current, AC, terminals, where at least one of the strings is a string of submodules and where each submodule comprises at least two switching elements and an energy storage element,
has at least two direct current, DC, terminals and is configured to be able to make a voltage contribution to the forming of an AC voltage on an AC terminal, and
a number of input stages, each comprising at least one energy delivery element, where at least some of the energy delivery elements are photovoltaic elements and where each input stage is connected to two DC terminals of a corresponding submodule in order to enable delivery of power to or from at least one AC terminal when the corresponding submodule contributes to the forming of the AC voltage on the AC terminal.

In one variation the strings are all strings with submodules, each contributing to the forming of a phase voltage on an AC terminal. In this case the strings may be configured to also balance the currents supplied via the AC terminals.

The inverter arrangement according to a first type may comprise three strings delta connected, in which case the AC terminals may be provided at the junctions between the strings. The balancing may in this case be made using zero sequence currents.

The inverter arrangement according to a second type may comprise at least two and with advantage three strings connected in parallel with each other, in which case the AC terminals may be provided at the midpoints of the strings. In this case the balancing may be made through introducing 2nd order harmonics in the phase voltages.

The inverter arrangement according to a third type may additionally comprise three parallel strings, where one string is a string with submodules and the other two are strings with switching elements in an H bridge structure, where the midpoints of the strings in the H bridge structure form first and second AC terminals for a single-phase voltage.

In the inverter arrangement according to the second and third types it is furthermore possible that at least one energy storage element is connected in parallel with the strings.

The energy delivery elements may additionally comprise energy storage elements.

When the energy delivery elements comprise both photovoltaic elements and energy storage elements, it is possible that the DC terminals of at least one submodule of a string is either connected to an energy storage element or a photovoltaic element. It is additionally possible that at least one submodule of a string is connected via its DC terminals to both an energy storage element and a photovoltaic element.

It is furthermore possible that one energy delivery element of at least one input stage is connected to the DC terminals of a submodule via a DC/DC converter, where this energy delivery element may be a photovoltaic element or an energy storage element.

When the energy delivery element connected to the DC terminals of a submodule via a DC/DC converter is a photovoltaic element, it is additionally possible that an energy storage element is connected to a DC link between the DC/DC converter and the DC terminals of the submodule.

The submodules may comprise submodules with unipolar voltage contribution capability, such as half-bridge submodules. It is additionally or instead possible that the submodules comprise submodules with bipolar voltage contribution capability. In the latter case the submodules may be full-bridge submodules. Alternatively or instead the submodules with bipolar voltage contribution capability may comprise a branch of energy storage elements and a switching arrangement for causing one of the energy storage elements in the branch to make a voltage contribution. The latter type of submodule is sometimes referred to as a neutral point clamped submodule.

The inverter arrangement may furthermore comprise a control unit controlling the operation of the submodules, which may involve controlling the submodules to contribute to the forming of an AC voltage, controlling the insertion time of the submodules in order to deliver power and the controlling of the submodules to introduce circulating currents in a string.

The control unit may moreover be configured to individually control each submodule to deliver and/or receive power to and/or from the corresponding connected input stages. This control may be based on the individual power delivery and receiving capabilities of the input stages connected to the submodules. The control may more particularly involve individually optimising the power delivered to and/or from the submodules based on the individual power delivery and receiving capabilities of the input stages.

The submodules communicate with the control unit via a communication channel. This may be done in order to receive control signals and deliver status reports.

The communication channel may be realized as an independent communication channel, for instance using fiber optics. Alternatively the communication channel may employ the electrical power transfer infrastructure of the inverter arrangement, where the electrical power transfer infrastructure comprises the conductors and lines connecting the submodules with each other and with the AC terminals, i.e. the conductors and lines interconnecting the submodules and AC terminals.

The control channel may be realized through modulating signals, such as control signals and status reports, onto the conductors and lines that make up the electrical power transfer infrastructure.

The invention has a number of advantages. It allows the number of and/or the size of components to be reduced. It is modular and is therefore also easily adaptable to varying size requirements. The modularity also allows individual control of each cell with regard to delivering or storing energy. Thereby the power delivery of each cell may be optimized with the regard to the power delivery and/or power receiving capabilities of the input stages connected to it. The system is also energy self-sufficient. There is no need to receive any power from auxiliary power supply devices.

### BRIEF DESCRIPTION OF THE DRAWINGS

The present invention will in the following be described with reference being made to the accompanying drawings, where
fig. 1 schematically shows a first realization of an inverter arrangement comprising a number of strings with submodules connected to energy delivery elements,
fig. 2 schematically shows a second realization of an inverter arrangement, fig. 3 schematically shows a first type of input stage only comprising a first type of energy delivery element in the form of a photovoltaic element,
fig. 4 schematically shows a second type of input stage only comprising a second type of energy delivery element in the form of an energy storage element,
fig. 5 shows a first type of submodule that may be used in any of the inverter arrangement realizations,
fig. 6 shows a second type of submodule that may be used in any of the inverter arrangement realizations.
fig. 7 shows a third type of submodule that may be used in any of the inverter arrangement realizations.
fig. 8 schematically shows a third realization of an inverter arrangement, fig. 9 shows a third type of input stage comprising the first type of energy delivery element connected to a DC/DC converter,
fig. 10 shows a fourth type of input stage comprising the second type of energy element connected to a DC/DC converter,
Fig. 11 shows a fifth type of input stage comprising the first and second types of energy delivery elements and an DC/DC converter, and
Fig. 12 shows an alternative placing of the energy storage element in the second type of inverter structure.

### DETAILED DESCRIPTION OF THE INVENTION

In the following, a detailed description of preferred embodiments of the invention will be given.

The invention is concerned with an inverter arrangement that is based on photovoltaic elements or photovoltaic modules. In the inverter arrangement there are a number of strings comprising switching elements. There are more particularly at least two strings comprising switching elements, where the strings are connected to at least two Alternating Current (AC) terminals and at least one of the strings is a string of submodules. Each submodule comprises at least two switching elements, has at least two direct current (DC) terminals and is configured to be able to make at least one voltage contribution to the forming of at least one AC voltage on an AC terminal.

In an inverter arrangement there is also a number of input stages, each comprising at least one energy delivery element, where at least some of the energy delivery elements are photovoltaic elements. Each input stage is connected to two DC terminals of a corresponding submodule in order to enable delivery of power to or from at least one AC terminal when the corresponding submodule contributes to the forming of the AC voltage on the AC terminal.

Each submodule has two AC terminals and at least two DC terminals, where the AC terminals are used for interconnection of the submodules in the strings and the DC terminals are used for connection to input stages.

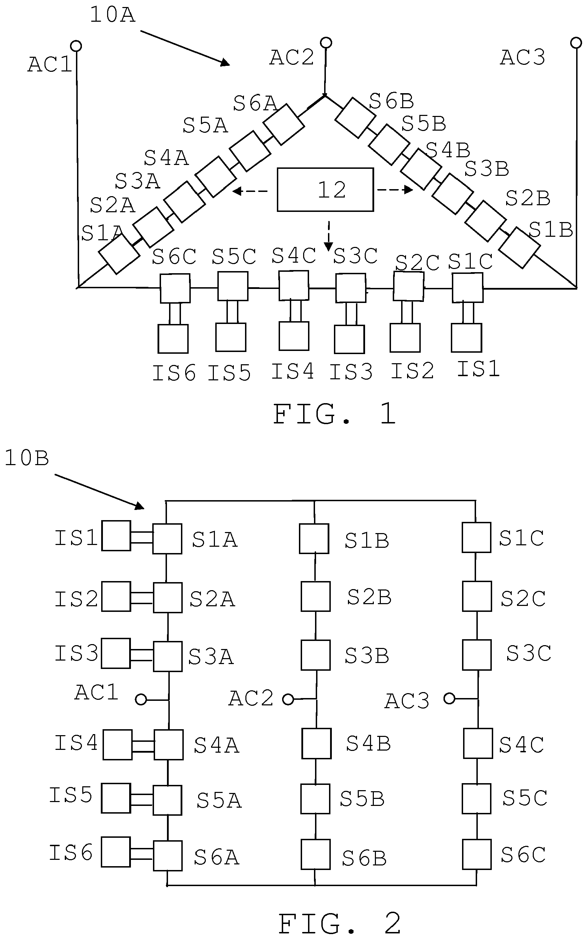

Fig. 1 shows one first type of inverter arrangement that is based on photovoltaic elements. The strings are in this type of inverter arrangement all strings comprising submodules.

In the example given in fig. 1, there are three strings of submodules, where as an example each string comprises six submodules. There is therefore a first string A having a first, second, third, fourth, fifth and sixth submodule S1A, S2A, S3A, S4A, S5A and S6A connected in series or cascade with each other using the submodule AC terminals, a second string B having a first, second, third, fourth, fifth and sixth submodule S1B, S2B, S3B, S4B, S5B and S6B connected in series or cascade with each other using the submodule AC terminals and a third string C having a first, second, third, fourth, fifth and sixth submodule S1C, S2C, S3C, S4C, S5C and S6C connected in series or cascade with each other using the submodule AC terminals. It should be realized that number of submodules shown is merely an example.

Generally, there may be n submodules in a string, where the number n is a number that is required to form a desired AC voltage.

In the first type of inverter arrangement 10A, the three strings forming an inverter are delta-connected. Thereby a first AC terminal AC1 of the inverter arrangement 10A is provided at a junction between the first and the third strings A and C, a second AC terminal AC2 of the inverter arrangement 10A is provided at a junction between the first and the second strings A and B and a third AC terminal AC3 of the inverter arrangement 10A is provided at a junction between the second and the third strings B and C.

Each string contributes to the forming of a phase voltage on an AC terminal. In the inverter arrangement in fig.1, the first and third string together contribute to the forming of a first phase voltage on the first AC terminal AC1, the first and second string together contribute to the forming of a second phase voltage on the second AC terminal AC2 and the second and third string together contribute to the forming of a third phase voltage on the third AC terminal AC3.

It can furthermore be seen that a number of input stages are connected to the submodules of the third branch. These input stages are connected to the submodule DC terminals. In the example given in fig. 1 there is a one to one correspondence between input stage and submodule. Each input stage is thus connected to a corresponding submodule. As is shown in the figure there is thus a first input stage IS1 connected to the first submodule S1C, a second input stage IS2 connected to the second submodule S2C, a third input stage IS3 connected to the third submodule S3C, a fourth input stage IS4 connected to the fourth submodule S4C, a fifth input stage IS5 connected to the fifth submodule S5C and a sixth input stage IS6 connected to the sixth submodule S6C.

It should here be realized that also the submodules of the other strings are connected to input stages in the same way. Moreover every input stage is connected to a submodule. However, as will become evident later on, it is possible that two input stages are connected to the same submodule. This also means that every submodule is connected to at least one input stage, where it is possible that a submodule is connected to two input stages.

There is also a control unit 12 configured to control the submodules. The control will be described in more detail later on.

Each submodule and possibly also one or more input stage is connected to the control unit 12 via a communication channel over which control signals are transferred to the submodules and status reports are made to the control unit, which status reports may comprise measurements of electrical quantities, such as voltages, currents and power, of the submodules and input stages. The submodules thus communicate with the control unit via the communication channel. This control channel may be realized using fiber optics or dedicated data communication cables. However, according to some advantageous aspects the communication channel may employ the electrical power transfer infrastructure of the inverter arrangement, where the electrical power transfer infrastructure comprises the conductors and lines connecting the submodules with each other and with the inverter AC terminals, i.e. the conductors and lines interconnecting the submodules and inverter AC terminals.

The control channel may more particularly be realized through modulating signals, such as control signals and status reports, onto the conductors and lines that make up the electrical power transfer infrastructure. The signals may as an example be modulated using power line communication (PLC). When the communication channel is realized in this way the inverter arrangement may be realized completely independent of any separate communication infrastructure.

Fig. 2 shows a second type of inverter arrangement 10B. In this inverter arrangement 10B there are also three strings of submodules. However, in this case the strings are connected in parallel with each other. Furthermore, the AC terminals AC1, AC2 and AC3 of the inverter arrangement 10B are provided at the midpoint of the submodule strings. Thereby the first AC terminal AC1 is provided at the midpoint of the first string A, the second AC terminal AC2 is provided at the midpoint of the second string B and the third AC terminal AC3 is provided at the midpoint of the third string C. The strings may in this case also be denoted phase legs. It should here be realized that in this case it is also possible with fewer strings, such as only two, as well as more strings, such as four.

Each string contributes to the forming of a phase voltage on an AC terminal. In the inverter arrangement in fig.2, the first string contributes to or is used for forming of a first phase voltage on the first AC terminal AC1, the second string contributes to or is used for forming of a second phase voltage on the second AC terminal AC2 and the third string contributes to or is used for forming of a third phase voltage on the third AC terminal AC3.

As stated above, at least some of the energy delivery elements of the input stages comprise photovoltaic elements. It is additionally possible that at least some input stages comprise energy storage elements.

Also in this case there is a control unit (not shown) employing a communication channel that may be realized in the same way as the communication channel of the first embodiment.

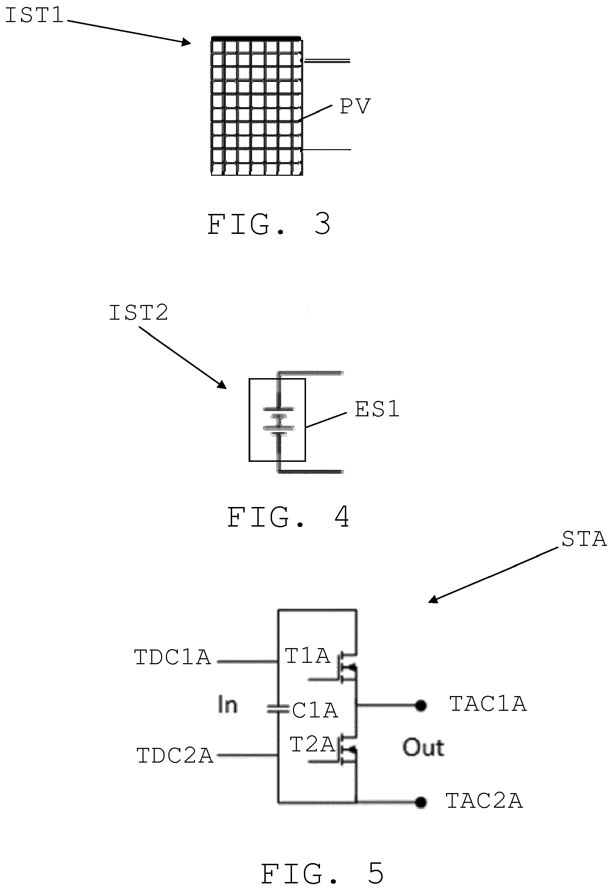

Fig. 3 schematically shows a first type of input stage IST1 only comprising a first type of energy delivery element, which energy delivery element is a photovoltaic element PV. Fig. 4 shows a second type of input stage IST2 only comprising a second type of energy delivery element, which is a first energy storage element ES1, here in the form of a battery. As an alternative the energy storage element may be a capacitor.

It is possible that the submodule strings are only connected to the first type of input stage. It is as an alternative possible that the submodule strings are connected to a combination of the first and second types of input stages.

Fig. 5 shows a first type of submodule STA for use in any of the inverter arrangement types. The submodule STA is a half-bridge submodule and includes an energy storage element in the form of a first capacitor C1A, which is connected in parallel with a first branch of switching elements, where each switching element may be realized in the form of a controllable semiconductor that may be a transistor, which with advantage may be a metal oxide semiconductor field effect transistor (MOSFET). In fig. 5 there is therefore a first switching element T1A and a second switching element T2A connected in series with each other. The submodule STA has a first AC connection terminal TAC1A and a second AC connection terminal TAC2A, each providing a connection for the submodule to a corresponding string. In this first type of submodule STA the first AC connection terminal TAC1A is more particularly provided at the midpoint of the first branch of switching elements, which in this case is at the junction between the first and the second switching element T1A and T2A, while the second AC connection terminal TAC2A is provided at an end point of the first branch of switching elements, which in this case is at a junction between the second switching element T2A and the capacitor C1A. A first DC terminal TDCiA is provided at the junction between the energy storage element C1A and the first switching element T1A while a second DC terminal TDC2A is provided at the junction between the second switching element T2A and the capacitor C1A.

This submodule type has a unipolar voltage contribution capability. In operation the first type of submodule STA is therefore controlled to provide a unipolar voltage contribution to the string; which voltage contribution is either the voltage across the capacitor C1A or a zero voltage. Voltage insertion is thereby achieved through connecting the capacitor C1A between the two AC terminals TAC1A and TAC2A. Thereby the input stage connected to the two DC terminals will also be connected between the AC terminals, which may be used to supply power between the energy delivery element and the inverter.

In a variation of the first type of submodule the second AC connection terminal is instead provided at the junction between the first switching element and the capacitator.

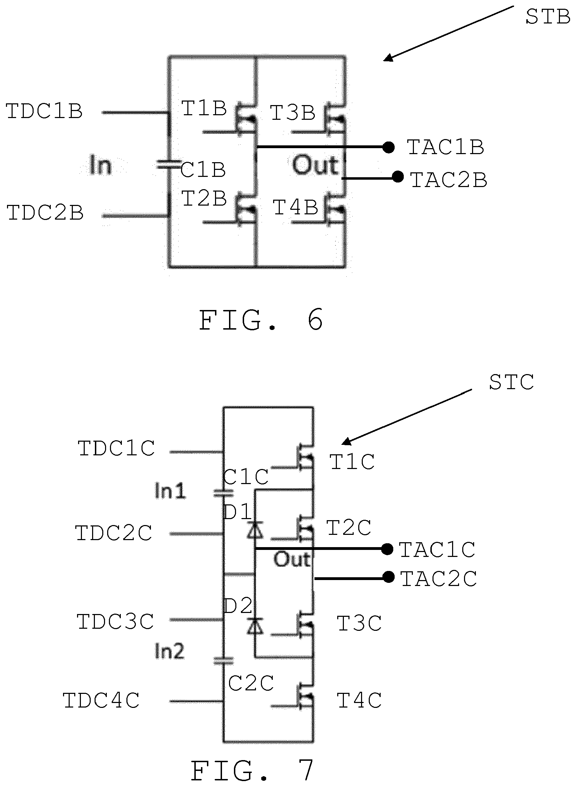

Fig. 6 schematically shows a second type of submodule STB that has a bipolar voltage contribution capability and including the same type of components, i.e. a first and a second switching element T1B and T2B in a first branch of switching elements provided in parallel with a capacitor CiB. However, here there is also a third and a fourth series-connected switching element T3B and T4B, provided through a third transistor and a fourth transistor in a second branch of switching elements that is also connected in parallel with the capacitor CiB. As before, a first AC terminal TAC1B is provided at the midpoint of the first branch of switching elements. However, the second AC terminal TAC2B is in this case provided at the midpoint of the second string of switching elements, i.e. between the third and the fourth switching element T3B and T4B. Just as in the first type of submodule, the first DC terminal TDC1B is provided at the junction between the energy storage element CiB and the first switching element T1B while the second DC terminal TDC2B is provided at the junction between the second switching element T2B and the capacitor CiB. It can also be seen that the first DC terminal TDC1B is connected to the junction between the energy storage element CiB and the third switching element T3B and the second DC terminal TDC2B is connected to the junction between the fourth switching element T4B and the capacitor CiB. In operation the second type of submodule is controlled to provide a bipolar voltage contribution. It either provides a zero voltage or the positive or negative voltage of the energy storage element CiB to the string. Thereby also the input stage is connected to the inverter.

As can be understood from fig. 3, 4, 5 and 6, it is possible that the DC terminals of at least one submodule of a string may either be connected to an energy storage element or to a photovoltaic element.

Fig. 7 shows a third type of submodule STC, which is another type of submodule with bipolar voltage contribution capability. This submodule STC comprises a first branch of switching elements comprising four series-connected switching elements, T1C, T2C, T3C and T4C. This first branch of switching elements is connected in parallel with a first branch of energy storage elements comprising a first capacitor C1C connected in series with a second capacitor C2C. There is furthermore a first diode D1 having an anode connected to a midpoint of the capacitor branch, i.e. to a junction between the first and second capacitors C1C and C2C. The first diode D1 also has a cathode connected to a junction between the first and second switching elements T1C and T2C. There is also a second diode D2 having an anode connected to a junction between the third and fourth switching elements T3C and T4C well as a cathode connected to the midpoint of the capacitor branch. The first AC terminal TAC1C is here provided at the midpoint of the capacitor branch, i.e. at the junction between the first and the second capacitor C1C and C2C, while the second AC terminal TAC2C is provided at the midpoint of the first branch of switching elements, i.e. between the second and the third switching element T2C and T3C. The first DC terminal TDC1C is provided at the junction between the first energy storage element CiC and the first switching element T1C, while the second DC terminal TDC2C is provided at the junction between the first and second energy storage elements C1C and C2C. There is also a third DC terminal TDC3C provided at the same junction between the energy storage elements C1C and C2C as well as a fourth DC terminal TDC4C placed at the junction between the fourth switching element T4C and the second capacitor C2C. Just as the second type of submodule also this third type of submodule, which may be termed a neutral point clamped (NPC) submodule, provides three voltage levels; a zero voltage level, a voltage level corresponding to the voltage across the first capacitor C1C and a voltage level corresponding to the voltage across the second capacitor C2C. The branch with switching elements and the two diodes may here be seen as forming a switching arrangement for causing one of the energy storage elements in the branch to make a voltage contribution to the string.

It may here also be mentioned that the second and third DC terminals TDC2C and TDC3C may be joined into one common central DC terminal.

It can be seen from fig. 3, 4 and 7 that it is also possible that at least one submodule of a string is connected via its DC terminals to both an energy storage element and a photovoltaic element. Naturally it may also be connected to two photovoltaic elements or two energy storage elements.

In operation of the first and second types of inverter arrangements, the control unit 12 controls the submodules to form a three phase AC voltage on the AC terminals through controlling the submodules to make a voltage contribution that assists in the forming of such a phase voltage. Such a control may also be termed insertion of the submodule in the string as the control involves inserting the voltage contribution of the submodule for forming the phase voltage. Thereby a stepped voltage shape is formed on each of the three AC terminals, which shapes may be shifted in phase in relation to each other by for instance 120 degrees. The AC terminals may furthermore be connected to an AC grid in order for the inverter arrangement to deliver or receive power to or from the grid.

Moreover, when a submodule is inserted then also the input stage connected to it is inserted, where a photovoltaic element or a battery of an inserted submodule may then deliver power to the AC grid. This means that a photovoltaic element or a battery may supply power to the AC grid via the AC terminals of the inverter arrangement.

The supply of power to and/or from an input stage may more particularly involve individually controlling the submodules to perform such power supply. The control unit 12 may therefore be configured to individually control each submodule to deliver and/or receive power to or from the corresponding connected input stages. This control may be based on the individual power delivery and receiving capabilities of the input stages connected to the submodules. The control may more particularly involve individually optimising the power delivered to and/or from the submodules based on the individual power delivery and receiving capabilities of the input stages, for instance using Maximum Point Power Tracking (MPPT). The various elements of an input stage may have different power delivery and/or receiving capabilities that may be considered in the control.

One photovoltaic element may for instance be shaded and another receiving direct sunlight and therefore the maximum deliverable power of these may differ. One energy storage element may have a higher energy level than another, which means that this energy storage element is able to deliver more energy but is able to store less energy than the other. These individual differences may thus be considered when there is an individual control. According to aspects of the invention the use of a number of strings, where at least one is a string of submodules, allows a number of improvements to be made of the inverter arrangement that is based on photovoltaic elements, which improvements involves a reduction of the number and/or the size of components in the inverter arrangement.

One such improvement is the modularity, which allows the converter to be easily adapted to the size required by the circumstances. This also allows individual control of each submodule with regard to power delivery and receiving capability of the connected input stage stages.

Another advantage is that there is no need for any auxiliary power supply devices.

One advantage with the use of the first type of input stage is that it is a single conversion stage with high efficiency.

Another improvement is the delivery of symmetrical three-phase power.

The power delivered by an input stage is typically controlled by the length of time of insertion of the corresponding submodule.

Photovoltaic elements may not be able to deliver the same amount of energy. One photovoltaic element may for instance be shaded while another is directly hit by sunlight. They may therefore be unable to deliver the same amount of power. This could lead to the photovoltaic elements of two strings delivering different amounts of power. Through using a three-phase system it is possible to counter this difference in power delivery, especially since it is possible to balance the power between the phases. Any power deviation between two strings can then be balanced using circulating currents, i.e. using a current that circulates between the strings. It is thus possible to balance the phase currents.

The balancing of the phase currents is achieved through forming of circulating currents between the submodule strings. This is in the first type of inverter achieved through introducing a zero sequence current that circulates between the strings. The use of delta connected strings in the first type of inverter arrangement thus allows a zero sequence circulating current to balance the power between the phases and thus to deliver symmetrical power to the grid. Thereby balanced grid operation is achieved independently of the available energy in each string. The balancing of the current also has the advantage of relaxing the filtering requirements on the AC side of the inverter. This three-phase configuration may for instance be able to reduce the size and complexity or completely eliminate an additional active filtering stage used to improve Total Harmonic Distortion (THD) and cope with grid transients.

MMC configuration provides extra functionalities, such as boosting capability.

In the second type of inverter the circulating currents are introduced through the control unit adding harmonics to the generated AC voltage, such as second order harmonics, which circulating currents cancel out each other. The sum of the added circulating currents should thus be zero. The balancing is thus made through introducing 2nd order harmonics in the phase voltages.

If the input stages comprise energy storage elements such as batteries, then it is furthermore possible to have the photovoltaic elements charge the batteries when they generate a surplus of power and to let the batteries supply additional power to a connected AC grid when the power delivered by the photovoltaic elements is insufficient. The use of batteries thus enables a more stable power delivery, which may also reduce the current balancing requirements.

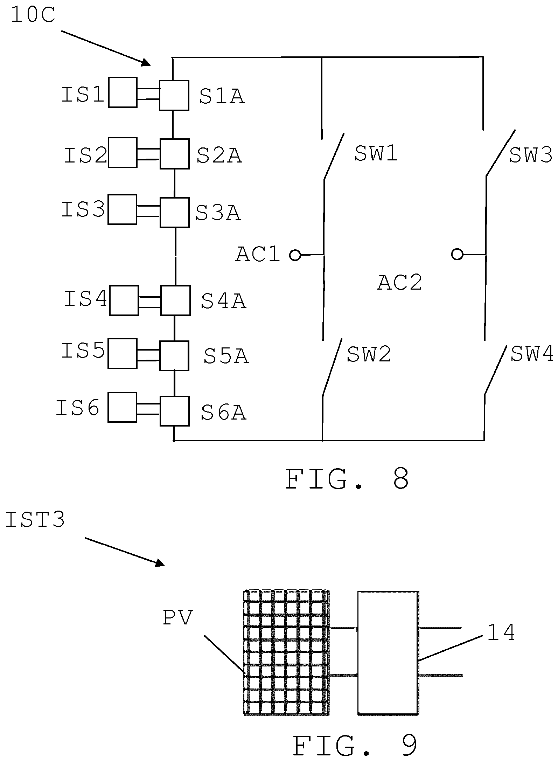

Fig. 8 schematically shows a third type of inverter arrangement 10C that is a single-phase inverter arrangement where there are three parallel strings. In this inverter arrangement 10C there is one string with submodules, which is connected to an H-bridge switching structure comprising four switching elements SW1, SW2, SW3 and SW4. The H bridge switching structure here comprises a first string of switching elements comprising a first and a second series-connected switching element SW1 and SW2 and a second string of switching elements comprising a third and a fourth series-connected switching element SW3 and SW4. Two of the strings are thus strings with switching elements in the H bridge structure. The midpoint of the first string of switching elements forms a first AC terminal AC1 and the midpoint of the second string of switching elements forms a second AC terminal AC2 for a single-phase voltage. The first and second strings of switching elements are also connected in parallel with the string of submodules.

The third type of inverter arrangement may be operated slightly differently than the first and second types. This arrangement is a single-phase arrangement and the submodules are with advantage of the first type.

Also in this case there is a control unit (not shown) employing a communication channel that may be realized in the same way as the communication channel of the first embodiment.

In this type of arrangement the submodules are controlled to form a positive half period of a waveshape and the switching arrangement is controlled to change the polarity of the waveshape in order to obtain the AC voltage, where when the first and the fourth switching elements SW1 and SW4 are on, the submodule string is connected between the AC terminals AC1 and AC2 with a first polarity and when the second and the third switching elements SW2 and SW3 are on, the submodule string is connected between the AC terminals AC1 and AC2 with a second opposite polarity.

Also here it is possible to individually control each submodule to deliver and/or receive power to or from the corresponding connected input stages. The control may also in this case be based on the individual power delivery and receiving capabilities of the input stages connected to the submodules and may likewise involve individually optimising the power delivered to and/or from the submodules based on the individual power delivery and receiving capabilities of the input stages, such as using MPPT.

In the examples given above, the input stages were realized through only comprising energy delivery elements of the first or the second type.

It is furthermore possible to also add DC/DC converters to the input stages. It is thus possible that one energy delivery element of at least one input stage is connected to the DC terminals of a submodule via a DC/DC converter.

A third type of input stage IST3 comprising the first type of energy delivery element and a DC/DC converter 14 is schematically shown in fig. 9. It can there be seen that a photovoltaic element PV is connected to a first side of a DC/DC converter 14, the second side of which is to be connected to the DC terminal of a corresponding submodule. In this case the energy delivery element of an input stage connected to the DC terminals of a submodule via a DC/DC converter is thus a photovoltaic element PV.

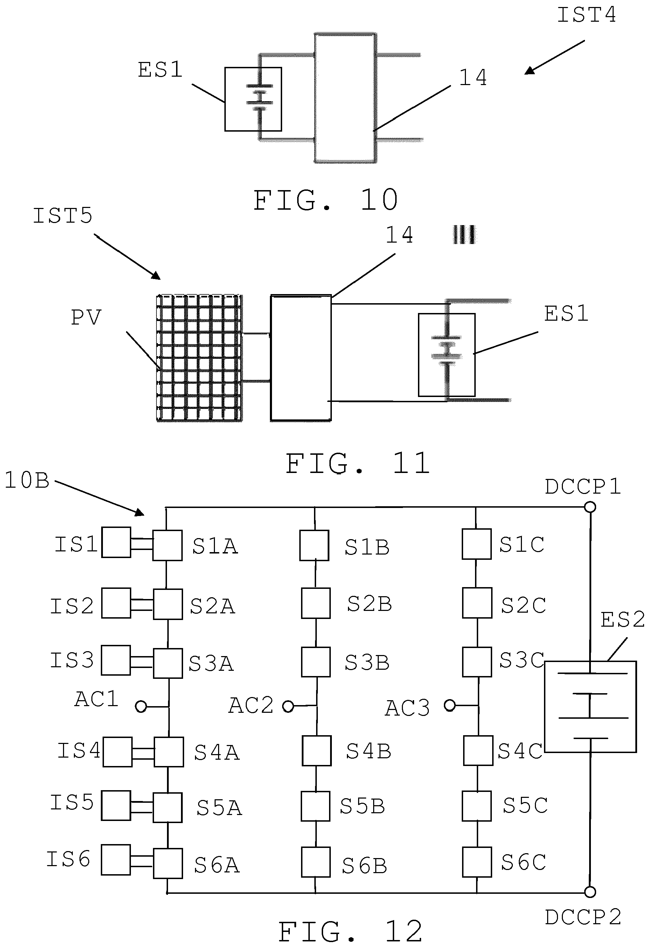

A fourth type of input stage IST4 comprising the second type of energy delivery element and a DC/DC converter 14 is schematically shown in fig. 10. It can there be seen that a first energy storage element ES1 in the form of a battery is connected to a first side of a DC/DC converter 14, the second side of which is to be connected to the DC terminal of a corresponding submodule.

A fifth type of input stage IST5 comprising the first and the second types of energy delivery elements and a DC/DC converter 14 is schematically shown in fig. 11. It can there be seen that a photovoltaic element PV is connected to a first side of a DC/DC converter 14, the second side of which is connected to a DC link which leads to two DC terminals of a corresponding submodule. A first energy storage element ES1 in the form of a battery is connected to this DC link between the DC/DC converter 14 and the DC terminals of the submodule. The battery is thus connected between the second side of the DC/DC converter 14 and the DC terminals of the submodule.

The combination of a DC/DC converter and a photovoltaic element is advantageous in that the input voltage of the submodule may be regulated. Thereby the submodule will not require any additional control effort for voltage balancing, but is stiff. This may be of interest if the converter output is connected to a capacitor.

The addition of a DC-DC stage can be interesting when using batteries as energy storage elements, to allow better utilization of the battery without requiring effort from the control unit to keep voltage balance among submodules. The units connected to batteries can also assume the active filter functionality, removing the necessity of an additional converter in the inverter arrangement.

The energy storage element was above provided as a part of an input stage.

It should be realized that it can be realized in another way.

Fig. 12 shows an alternative placement of an energy storage element in the inverter arrangement of the second type. When the three strings A, B and C of submodules are connected in parallel with each other, where the string midpoints forms AC connection terminals AC1, AC2 and AC3, then the ends of the strings forms DC connection points. A first end of the three parallel strings may thus form a first DC connection point DCCP1, while a second opposite end of the parallel strings forms a second DC connection point DCCP2. The first DC connection point DCCP1 is thus formed by the interconnected first ends of the submodule strings, while the second DC connection point DCCP2 is formed by the interconnected second ends of the submodule strings. In this case a second energy storage element ES2, for instance in the form of a battery, may be connected between these two DC connection points DCCP1 and DCCP2. Thereby at least one energy storage element ES2 is connected in parallel with the strings that comprise switching elements.

It should also be realized that it is possible to add also the second energy storage element to the third type of inverter arrangement. It should also be realized that the use of the second energy storage element ES2 can be combined with the use of the first energy storage element ES1 in an input stages.

It should furthermore be realized that there may be a mixture of input stage types in an inverter arrangement. A string may therefore have any type of input stage combination. It is also possible to mix the types of submodules in a string. A string may likewise have any type of submodule combination. However, it may be advantageous if the same input stage mixture and/or the same submodule mixture is used in the different submodule strings.

The use of the third type of submodule also allows for further cost reduction, allowing the use of 1 converter unit for every 2 energy delivery elements. This can lead to a more cost effective inverter arrangement and simpler installation. The use of the first type of submodule is advantageous in that the number of power semiconductors are reduced by half compares with the other types, as well as the number of gate drivers.

A MOSFET is merely one type of switching element that is possible to use. A switching element may as an example instead be a junction field effect transistor (JFET) or a bipolar transistor, such as an Insulated Gate Bipolar Transistor (IGBT), perhaps together with an anti-parallel diode. It should also be realized that wide-bandgap switching elements may be used, such as Gallium Nitride (GaN) or Silico Carbide (SiC) switching elements. The above-mentioned examples are thus only a few of a multitude of different possible switching element realizations that may be used.

The control unit 12 may be implemented through a computer or a processor with associated program memory or dedicated circuit such Field-Programmable Gate Arrays (FPGAs) or Application Specific Integrated Circuits (ASICs).

The control unit may thus be realized in the form of discrete components, such as FPGAs or ASICs. However, it may also be implemented in the form of a processor with accompanying program memory comprising computer program code that performs the desired control functionality when being run on the processor. A computer program product carrying this code can be provided as a data carrier such as a memory carrying the computer program code, which performs the above-described control functionality when being loaded into a control unit of a voltage source converter.

From the foregoing discussion it is evident that the present invention can be varied in a multitude of ways. It shall consequently be realized that the present invention is only to be limited by the following claims.

## Claims

1. An inverter arrangement (10A; 10B; 10C) based on photovoltaic elements (PV), the inverter arrangement (10A, 10B. 10C) comprising:
at least two strings comprising switching elements (T1A, T2A; T1B, T2B, T3B, T4B; T1C, T2C, T3C, T4C; SW1, Sw2, SW3, SW4), said strings being connected to at least two Alternating Current, AC, terminals (AC1, AC2, AC3) , where at least one of the strings is a string of submodules (S1A, S2A, S3A, S4A, S5A, S6A, S1B, S2B, S3B, S4B, S5B, S6B, S1C, S2C, S3C, S4C, S5C, S6C), each submodule (STA; STB; STC) comprising at least two switching elements (T1A, T2A; T1B, T2B, T3B, T4B; T1C, T2C, T3C, T4C;) and an energy storage element (C1A; CiB; C1C, C2C), having at least two direct current, DC, terminals (TDC1A, TDC2A; TDC1B, TDC2B; TDC1C, TDC2C, TDC3C, TDC4C) and being configured to make a voltage contribution to the forming of an AC voltage on an AC terminal, and
a number of input stages (IS1, IS2, IS3, IS4, IS5, IS6) each comprising at least one energy delivery element (PV; ESi), where at least some of the energy delivery elements are photovoltaic elements (PV), each input stage being connected to two DC terminals (TD1A, TDC22A; TDC1B, TDC2B; TDC1C, TDC2C; TDC3C, TDC4C) of a corresponding submodule (STA, STB; STC) in order to enable delivery of power to or from at least one AC terminal (AC1, AC2, AC3) when the corresponding submodule contributes to the forming of the AC voltage on the AC terminal.

2. The inverter arrangement (10A; 10B) according to claim 1, wherein the strings are all strings with submodules, each contributing to the forming of a phase voltage on an AC terminal.

3. The inverter arrangement (10A; 10B) according to claim 2, wherein the strings are configured to balance the currents supplied via the AC terminals.

4. The interface arrangement (10A) according to claim 2 or 3, wherein the strings are three delta connected strings and the balancing is made using zero sequence currents.

5. The inverter arrangement (10B) according to claim 2 or 3, wherein the strings are connected in parallel with each other and the balancing is made through introducing 2^{nd} order harmonics in the phase voltages.

6. The inverter arrangement (10C) according to claim 1, wherein there are three parallel strings, where one string is a string with submodules (S1A, S2A, S3A, S4A, S5A, S6A) and the other two are strings with switching elements (SW1, SW2, SW3, SW4) in an H bridge switching structure, where the midpoints of the strings in the H bridge structure form first and second AC terminals (AC1, AC2) for a single-phase voltage.

7. The inverter arrangement (10B; 10C) according to claim 5 or 6, further comprising at least one energy storage element (ES2) connected in parallel with the strings.

8. The inverter arrangement (10A; 10B; 10C) according to any previous claim, wherein the energy delivery elements comprise energy storage elements (ESi).

9. The inverter arrangement (10A; 10B; 10C) according to any previous claim, wherein one energy delivery element of at least one input stage (IST3; IST4; IST5) is connected to the DC terminals of a submodule via a DC/DC converter (14).

10. The inverter arrangement (10A; 10B; 10C) according to claim 9, wherein said energy delivery element is a photovoltaic element (PV).

11. The inverter arrangement (10A; 10B; 10C) according to claim 10, wherein an energy storage element (ESi) is connected to a DC link between the DC/DC converter (14) and the DC terminals of the submodule.

12. The inverter arrangement (10A; 10B; 10C) according to any previous claim, wherein the submodules comprise submodules with bipolar voltage contribution capability (STB; STC) and at least one submodule (STC) with bipolar voltage contribution capability comprises a branch of energy storage elements (C1C, C2C) and a switching arrangement (T1C, T2C, T3C, T4C, D1, D2) for causing one of the energy storage elements in the branch to make a voltage contribution.

13. The inverter arrangement (10A; 10B; 10C) according to any previous claim, further comprising a control unit (12) controlling the operation of the submodules.

14. The inverter arrangement according to claim 13, wherein the control unit (12) is configured to individually control each submodule to deliver and/or receive power to and/or from the corresponding connected input stages.

15. The inverter arrangement according to claim 13 or 14, wherein the submodules communicate with the control unit (12) via a communication channel, which communication channel employs the electrical power transfer infrastructure of the inverter arrangement.
